# FASCICULE DE BREVET EUROPEEN

(11) **EP 3 520 451 B1**
(45) Date de publication et mention de la délivrance du brevet: **08.07.2020**
(21) Numéro de dépôt: 17780840.9
(22) Date de dépôt: 26.09.2017
(51) Int. Cl.: H04W 12/00, G06F 9/445, H04W 8/20

(54) **ATTRIBUTION DE PROFILS À UNE PLURALITÉ DE TERMINAUX À CARTES SIM IMPLANTÉES**
ZUTEILUNG VON PROFILEN AN TERMINALS MIT EINGEBAUTEN SIM-KARTEN
ASSIGNMENT OF PROFILES TO A PLURALITY OF TERMINALS WITH EMBEDDED SIM CARDS

(30) Priorité: 29.09.2016 FR 1659316
(43) Date de publication de la demande: 07.08.2019
(73) Titulaire: ORANGE, 75015 Paris (FR)
(72) Inventeur: SCHOULER, Eric, 92326 Châtillon cedex (FR)
(74) Mandataire: Plasseraud IP
(86) Numéro de dépôt international: PCT/FR2017/052578
(87) Numéro de publication internationale: WO 2018/060582

(56) Documents cités:
- US-A1- 2009 217 348
- US-A1- 2014 162 622
- Gsm Association: "SGP.22 - RSP Technical Specification (Remote SIM Provisioning) Version 1.1", , 9 juin 2016 (2016-06-09), pages 1-125, XP055347670, Extrait de l'Internet: URL:http://www.gsma.com/newsroom/wp-conten t/uploads//SGP.22_v1.1.pdf [extrait le 2017-02-20] cité dans la demande

## Description

L'invention concerne la gestion de la délivrance d'un code d'activation d'un module de sécurité d'un dispositif communicant (ou « carte SIM »).

La conception des dispositifs communicants, et en particulier des terminaux mobiles de type smartphones notamment, s'oriente vers des solutions d'implantation de la carte SIM (« Subscriber Identity Module ») dans le terminal (ou « embedded SIM », noté ci-après e-SIM). Ces cartes sont « soudées » au terminal et fournies sans logiciel par le fabricant du terminal mobile. Le terminal ne peut alors être affilié à un opérateur que par le téléchargement d'un « profil » (par exemple un abonnement offrant un accès à un nombre plus ou moins grand de ressources et/ou pendant des durées plus ou moins grandes). L'opérateur dispose donc d'un élément fonctionnel qui détermine le profil associé à la carte e-SIM particulière installée dans le terminal, lequel peut alors être reconnu par le réseau pour opérer selon ce profil déterminé.

La carte SIM (ou son équivalent e-SIM intégré directement dans le terminal) comporte une mémoire programmable notamment avec des informations de profil attribué à la carte (ou directement au terminal).

Dans une situation actuellement connue, un opérateur ou un gestionnaire d'une flotte de terminaux peut acquérir un ensemble d'offres de profils, et doit activer ensuite, un à un, chaque profil auprès de chaque terminal.

Plus précisément, l'Association GSM (ou « GSMA ») spécifie une architecture requise pour mettre en œuvre le programme e-SIM. L'architecture, normalisée, est bâtie selon les principes classiques de l'opérateur où ce dernier réalise (de façon globale) les étapes suivantes :
▪ Un opérateur commande un lot de N profils à l'avance d'un certain type (identifié par le paramètre « profil description ID »),
▪ Un client souscrit une offre auprès de l'opérateur et ce dernier détermine le type de profil qui convient pour l'offre donnée et réserve un profil du type qui convient (une variante pouvant consister à générer le profil requis à cette étape plutôt que d'avoir construit un lot complet à l'avance),
▪ Afin de fournir ce profil au client, l'opérateur précise un code d'activation (ou « Activation Code » - AC) au client (ou encore l'opérateur demande au serveur SMDP+ de communiquer ce code d'activation à un dispositif de type SM-DS (« Discovery Server ») donnant automatiquement le code d'activation au terminal suite à une mise en marche du terminal ou encore par action explicite depuis un menu sur le terminal),
▪ Le client peut utiliser ensuite ce code afin de lancer le téléchargement du profil qui est alors installé dans la carte e-SIM de son terminal (en notant que dans le cas du dispositif SM-DS, le terminal récupère les données du code d'activation auprès du dispositif SM-DS et procède de façon analogue au téléchargement du profil).

Il apparait dans l'enchaînement d'étapes ci-dessus que le principe de base proposé par GSMA est de conditionner la délivrance du code d'activation à l'existence préalable d'un profil à télécharger. En outre, GSMA considère actuellement une activation par profil, et donc un unique code d'activation par profil.

En pratique, l'identifiant de la carte SIM (appelé « EID » pour une carte SIM intégrée), ainsi que dans les données extraites du code d'activation, sont reçues par un serveur chargé de la préparation des données de gestion de souscription (appelé serveur SMDP dans la norme GSMA actuelle, ou SMDP+ ci-après), lequel exploite le code d'activation et détermine si un profil, habituellement noté ICCID, est déjà prévu ou éventuellement déjà enregistré pour cette carte SIM, avant de délivrer le profil.

Ainsi, un opérateur ou un gestionnaire d'une flotte de terminaux doit gérer un à un l'association terminal et code d'activation, soit donc in fine le profil prévu pour chaque terminal... Une telle réalisation offre peu de souplesse de gestion car elle impose des profils prédéterminés pour une flotte de terminaux, alors même que les besoins des profils peuvent ne pas être nécessairement déjà prévus. Par exemple, un administrateur d'une flotte de terminaux d'une entreprise peut souhaiter commander initialement :
- trois profils « gold » (purement à titre d'exemple illustratif) pour des dirigeants de l'entreprises,
- vingt profils « silver » pour des cadres, et
- cent profils « standard » pour d'autres employés.
L'administrateur commande donc 123 terminaux et, dans le cas où l'un des employés quitte la société pour être remplacé par un cadre, il lui est impossible de changer dynamiquement le profil du terminal qui était destiné à l'employé, de sorte que le nouveau cadre doit utiliser le terminal de profil « standard » ou patienter après la commande d'un terminal à profil « silver ».
Le même problème se pose pour un opérateur fournissant une connexion au réseau pour une flotte de N terminaux. L'opérateur doit anticiper la demande sur N1 profils « gold », N2 profils « silver » et N3 profils « standard ». Il lui est impossible de définir ou redéfinir le profil une fois qu'il a reçu le code d'activation de la carte SIM. Il convient de bien noter que le problème est particulièrement marqué dans le cas d'une carte intégrée au terminal (e-SIM) car dans ce cas, le terminal lui-même ne peut servir que pour un profil préalablement déterminé.

Le document US 2014/162622 A1 (ODA TOSHIKANE [JP] ET AL, 12 juin 2014) décrit un dispositif permettant de gérer l'attribution de modules d'abonnement pour un groupe de terminaux de communication. Ce document décrit que, suite à la réception d'une demande d'attribution d'un module d'abonnement à un terminal de communication cible, le dispositif identifie le groupe comprenant ledit terminal de communication cible et lui attribue un module d'abonnement uniquement si une limite supérieure d'attribution pour le groupe n'a pas été atteinte.

La présente invention vient améliorer la situation.

Elle propose à cet effet un procédé, mis en œuvre par un serveur de contrôle, de configuration d'un module de sécurité associé à un terminal de télécommunication. En particulier, le serveur de contrôle attribue un code d'activation unique correspondant à une souscription comprenant une pluralité de N profils à attribuer à un ensemble de N terminaux respectifs. Le procédé comporte alors les étapes:
a) après activation du code auprès d'un premier terminal, attribuer un profil au premier terminal et enregistrer l'attribution de profil au premier terminal,
b) pour une nouvelle demande d'attribution de profil correspondant audit code d'activation, répéter l'étape a) si les N profils n'ont pas déjà été attribués.

Ainsi, dans l'approche de la présente invention, la première étape du procédé vise à activer le module de sécurité (par exemple une carte e-SIM) dans un premier temps, et non pas à définir d'abord le profil associé, le moment de l'activation du profil pouvant alors être repoussé selon le choix d'un gestionnaire de terminal ou de l'ensemble des terminaux (par exemple un gestionnaire d'une flotte de terminaux). Des vérifications supplémentaires peuvent suivre après l'activation (comme par exemple un type d'offre sollicité, contribuant à la définition du profil). Cette « inversion » d'étapes apporte notamment une flexibilité sur la sélection du profil, laquelle est reportée après les vérifications sur la carte e-SIM. Ces vérifications consistent notamment à vérifier une compatibilité entre un terminal, un identifiant de carte e-SIM et un profil. Dans l'art antérieur, comme le gestionnaire peut avoir acquis préalablement une flotte d'offres par exemple, les profils sont alloués d'emblée, ce qui ne convient pas pour proposer une approche dynamique dans l'allocation des profils de carte e-SIM. Le procédé permet ainsi d'associer un code d'activation à une pluralité de profils, la réception du code d'activation déclenchant des actions de livraison des services souscrits. Par « actions de livraison », on entend la configuration dans le réseau de l'opérateur des équipements permettant d'offrir les services souscrits. Le procédé permet ainsi d'introduire un contrôle par l'opérateur du processus de téléchargement du profil.
Ainsi, dans une réalisation, le serveur de contrôle associe N profils à attribuer lors de l'attribution du code d'activation.
Les N profils à attribuer sont ainsi déjà définis lors de l'attribution du code d'activation et sont associés au code d'activation.

En variante, le serveur de contrôle associe un profil au terminal lors de la demande d'attribution.
Dans cette variante, le profil est défini lors de l'activation du code. Ceci permet de rendre plus flexible l'attribution du profil au terminal. Les actions de livraison sont ainsi effectuées lors de l'attribution effective du profil. Ceci permet de limiter la consommation des ressources dans le réseau de l'opérateur.

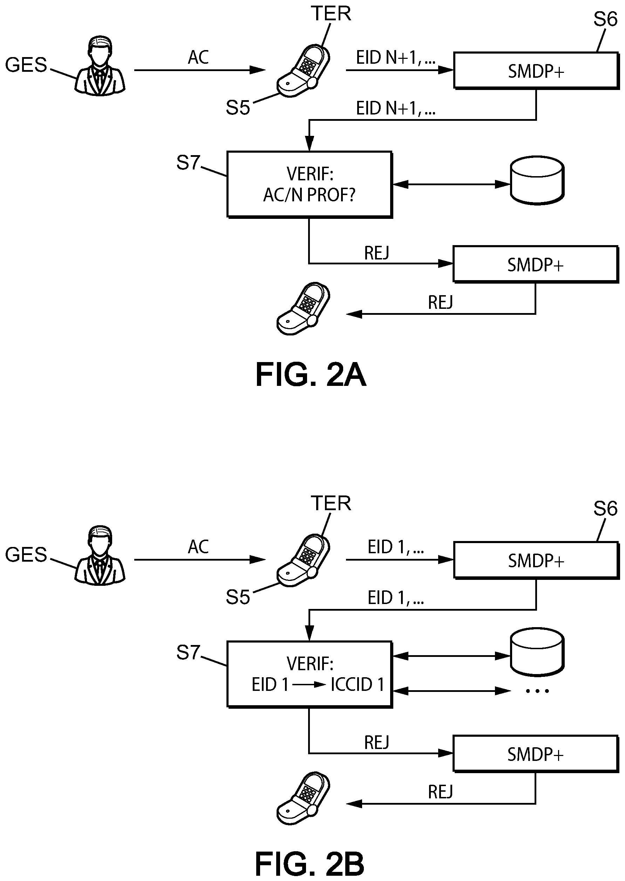

Dans une réalisation décrite en détails plus loin en référence à la figure 2A, toute nouvelle demande de profil correspondant audit code d'activation est rejetée si les N profils ont déjà été attribués.

Dans une forme de réalisation décrite en détails plus loin en référence à la figure 2B :
- après activation du code auprès d'un terminal de l'ensemble de terminaux, le serveur de contrôle reçoit de ce terminal au moins un identifiant de module de sécurité implanté dans le terminal (typiquement l'identifiant EID), et
- vérifie dans la mémoire si un profil a déjà été attribué pour un terminal ayant cet identifiant de module de sécurité.

Dans une forme de réalisation, il peut être décidé que si un profil a déjà été attribué pour un terminal ayant cet identifiant de module de sécurité, alors le serveur de contrôle rejette une demande d'attribution de profil émise par un terminal ayant cet identifiant de module de sécurité.

Toutefois, dans une variante de réalisation, il est possible de solliciter le gestionnaire de l'ensemble de terminaux pour redéfinir un profil, ce qui permet une gestion dynamique et évolutive de profils, comme présenté dans la description détaillée ci-après.

Dans une forme de réalisation en outre, si aucun profil n'a déjà été attribué pour un terminal ayant cet identifiant de module de sécurité le serveur de contrôle peut communiquer avec une entité informatique comportant une interface homme/machine à disposition d'un gestionnaire de l'ensemble de terminaux, pour recevoir du gestionnaire un choix de profil à attribuer à ce terminal.

Dans une forme de réalisation, après activation du code auprès d'un terminal de l'ensemble de terminaux, le serveur de contrôle reçoit de ce terminal au moins une donnée correspondant au code d'activation (par exemple une donnée de type MatchingID montrant notamment la validité du code d'activation) et permettant au serveur de contrôle de retrouver dans la mémoire les attributions de profils (habituellement d'identifiants de type ICCID) déjà effectuées pour des terminaux dudit ensemble de terminaux.

Dans une forme de réalisation, des données du terminal reçues auprès du serveur de contrôle, avant l'attribution d'un profil à ce terminal, transitent via un serveur d'accès. Ce serveur d'accès peut typiquement être un serveur SMDP ou SMDP+, ou équivalent.

Des données d'installation d'un profil auprès d'un terminal peuvent alors être émises par le serveur de contrôle et transmises au terminal, aussi, via un tel serveur d'accès.

La présente invention vise aussi un programme informatique comportant des instructions pour la mise en œuvre du procédé ci-avant, lorsque ce programme est exécuté par un processeur.

La présente invention vise aussi un serveur de contrôle, comportant au moins un circuit de traitement pour exécuter les étapes du procédé ci-avant, pour configurer chaque module de sécurité implanté dans chaque terminal de télécommunication d'un ensemble de N terminaux.

Un tel serveur peut alors comporter en outre une interface de communication avec un serveur d'accès.

Il peut comporter aussi une interface de communication avec une entité informatique incluant une interface homme/machine à disposition d'un gestionnaire de l'ensemble de terminaux, pour recevoir du gestionnaire un choix de profil à attribuer à chaque terminal de l'ensemble précité.

D'autres avantages et caractéristiques de l'invention apparaitront à la lecture de la description détaillée ci-après d'exemples de réalisation et à l'examen des dessins annexés sur lesquels :
- la figure 1 montre les interactions entre un client ou gestionnaire de flotte GES, un serveur de contrôle OPE et un serveur d'accès SER, pour l'activation d'un terminal et l'attribution d'un profil ensuite,
- la figure 2A illustre un premier cas de rejet d'une demande de profil si N profils ont déjà été alloués aux N terminaux de la flotte,
- la figure 2B illustre un deuxième cas de rejet d'une demande de profil si un profil a déjà été alloué à ce terminal,
- la figure 3 illustre une attribution de profils successifs aux N terminaux, contrôlée pas-à-pas par le gestionnaire de flotte, et
- la figure 4 illustre schématiquement la structure matérielle d'un serveur de contrôle.

La présente invention propose préférentiellement d'introduire une notion de groupe de profils pour laquelle une même et unique activation est sollicitée. Par rapport à l'actuelle normalisation GSMA, une relation univoque un à un devient un à N. Une application typique de ce besoin est le cas d'une commande multi-SIM où le client dispose alors d'un même code d'activation pouvant être utilisé pour tous ses profils. Un profil d'accès correspond à un ensemble de données et d'applications qui permettent à un terminal mobile, une fois le profil activé, d'accéder au réseau d'un opérateur.

Dans la suite de la description, on présente des exemples de plusieurs modes de réalisation s'appliquant à un module de sécurité de type carte eUICC tel qu'en cours de normalisation dans le cadre de l'association GSMA, mais le procédé de configuration s'applique également à d'autres types de module de sécurité. Plus généralement, le module de sécurité est une plateforme dédiée inviolable, comprenant du matériel et du logiciel, apte à héberger de manière sécurisée des applications et leurs données confidentielles et cryptographiques et fournissant un environnement d'exécution d'applications sécurisé, par exemple une carte de type UICC.

Le module de sécurité est typiquement une carte de type « eUICC » (de l'anglais « embedded Universal Integrated Circuit Card »), également appelée « eSIM » (de l'anglais « embedded Subscriber Identity Module »), ou carte SIM inamovible. Aucune limitation n'est attachée à ce type de carte. Dans un mode de réalisation particulier, le module de sécurité est une carte à puce avec un système d'exploitation offrant les fonctionnalités d'une carte de type eUICC. Dans un autre mode de réalisation particulier, le module de sécurité est intégré dans le terminal formant ainsi une seule entité.

La description qui suit se place dans le contexte des spécifications techniques, telles que définies par l'association GSMA. Plus précisément, l'architecture de la gestion de configuration à distance est définie dans la spécification technique « RSP Architecture », version 1.0, datée du 23 décembre 2015 et les procédures sont définies dans la spécification technique « SGP.22 - RSP Technical Spécification » v.1.1 datée du 9 juin 2016.

L'introduction du groupe de profils permet d'envisager non pas un groupe de même profil mais plusieurs groupes dont les profils pourraient être différents et ce, en utilisant toujours une même activation. L'activation au sens habituel GSMA n'est donc pas compatible avec cette approche puisque l'activation proposée est nouvelle et de nature différente par rapport à l'état de l'art. Cette nouvelle activation requiert une interaction entre le système d'information de l'opérateur (ou plus généralement entre un serveur de contrôle) et le serveur SMDP+ (pour « Subscription Manager Data Preparation+ ») afin de transmettre à ce dernier les ordres qui conviennent pour l'installation du profil auprès du terminal. Ce serveur est appelé serveur d'accès par la suite.

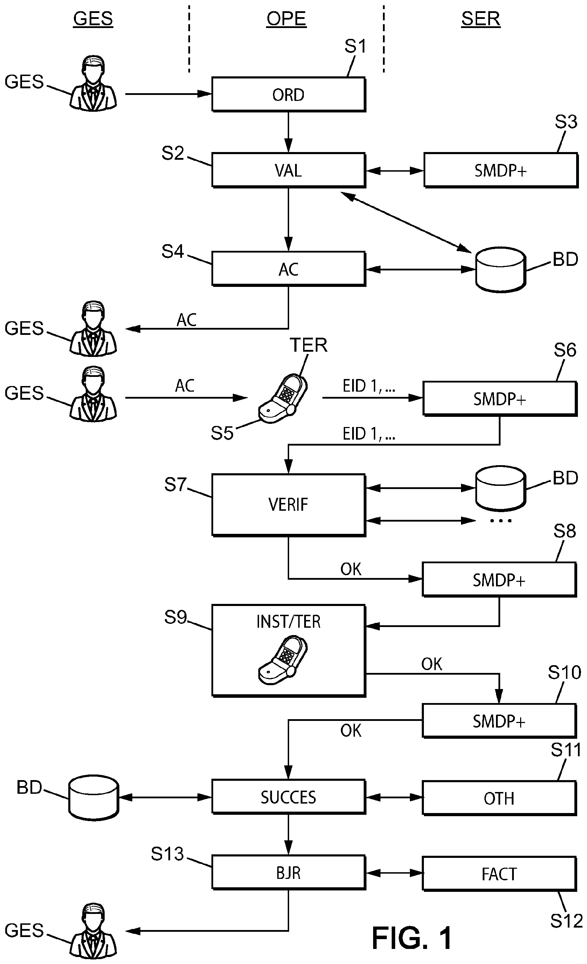

En référence à la figure 1, un client ou un gestionnaire de flotte GES confirme une commande, par exemple de type multi-SIM, et obtient en retour un code d'activation AC commun pour un ensemble de terminaux, à partir d'une seule commande multi-SIM. Tel que défini au paragraphe 4.1 de la spécification technique SG.22, un code d'activation AC correspond à une chaîne de caractères et comprend différents éléments d'information séparés par un caractère « $ ». Le code d'activation AC comprend notamment une adresse du serveur SMDP+ à contacter pour obtenir le profil d'accès, un donnée relative au code d'activation et un identifiant du serveur SMDP+. Il est bien entendu que cette liste n'est pas exhaustive. L'ordre est saisi auprès d'un serveur de contrôle OPE, par exemple intégré au système d'information de l'opérateur, à l'étape S1, et par exemple validé à l'étape S2, puis transmis au serveur SMDP+ (référencé SER sur la figure 1) à l'étape S3 pour une activation de N profils. Le serveur d'accès SER fournit un code d'activation AC correspondant à cette activation de N profils. Toujours dans cette étape S2, le serveur de contrôle OPE:
- enregistre pour ce client ou gestionnaire de flotte GES une offre multi-SIM, dans sa base de données BD,
- reçoit et enregistre le code d'activation AC dans sa base de données BD, ce code d'activation étant à destination du client ou du gestionnaire GES,
- et peut par exemple définir N profils à attribuer, et enregistrer N identifiants de profils correspondant ICCID.

A l'étape S4, le gestionnaire GES reçoit le code d'activation AC de la commande groupée, et peut ensuite (lui ou la personne à qui il a donné ce code), à l'étape S5, entrer dans le terminal TER ce code pour activer la carte SIM de ce terminal TER. L'entrée des données du code d'activation dans le terminal permet à ce dernier :
- d'identifier le serveur SMDP+ auquel il doit se connecter ensuite pour recevoir son profil, et
- de transmettre au serveur SMDP+ une donnée relative au code d'activation appelée habituellement « MatchingID ». Cette donnée est comprise dans le code d'activation AC et permet au serveur SMDP+ de déterminer l'opérateur auquel la demande de profil est adressée. Ainsi, le serveur SMDP+, sur réception de la donnée MatchingID est en mesure de transmettre les données reçues du terminal TER au serveur de contrôle OPE de l'opérateur approprié. Les données reçues du terminal comportent la donnée MatchingID, ainsi que l'identifiant d'e-SIM EID1 du terminal TER. Ainsi, le serveur SMDP+ peut transmettre au serveur OPE la donnée MatchingID et l'identifiant EID1. Le serveur de contrôle OPE peut, avec la donnée MatchingID identifier la commande multi-SIM correspondant au code d'activation AC attribué à la flotte de terminaux et déterminer que l'identifiant EID1 reçu correspond à celui d'un terminal de cette flotte.

Ainsi, le serveur de contrôle OPE peut retrouver les données de la commande multi-SIM correspondant à ce code d'activation AC, et déclencher la procédure d'attribution d'un profil (d'identifiant ICCID1) pour ce terminal (d'identifiant d'e-SIM EID1). Le serveur OPE peut ensuite décrémenter le nombre N de profils à attribuer à la flotte de terminaux ayant fait l'objet de la commande multi-SIM. Dans une variante, le serveur OPE a pu enregistrer préalablement à l'étape S3 tous les identifiants d'e-SIM (EID1, EID2, etc.) en correspondance du code d'activation AC et peut alors déterminer que l'identifiant EID1 reçu est propre à la commande multi-SIM à laquelle est affectée un code d'activation unique AC. Là encore, le serveur OPE peut lancer la procédure d'attribution d'un profil ICCID1 au terminal EID1, et décrémenter le nombre N de profils restant à attribuer.

Ainsi, dans l'un ou l'autre de ces modes de réalisation, sur réception de l'identifiant EID1, le serveur de contrôle OPE, à l'étape S7, retrouve la commande multi-SIM et les profils qui avaient été associés à cette commande, puis met à jour l'identifiant de profil ICCID1 propre à cet identifiant d'e-SIM EID1 dans sa base de données BD, et décrémente le nombre de profils restant à définir (N devient N-1). A cette étape S7 ou une étape ultérieure par exemple, des interactions peuvent intervenir entre le système d'information de l'opérateur et le gestionnaire de flotte pour vérifier et définir précisément le profil à attribuer au terminal TER (profil selon l'offre « gold » ou « silver », etc.). Ces données peuvent être ensuite stockées auprès du serveur de contrôle OPE.

Cette étape d'échanges entre l'opérateur et le gestionnaire GES et l'enregistrement des données de profil correspondantes auprès du serveur de contrôle OPE permet l'attribution définitive d'un profil.

A l'issue de l'étape S7, l'opérateur valide le profil et transmet au serveur SMDP+ une autorisation de télécharger le profil vérifié (selon l'offre « gold » ou « silver », etc.) d'identifiant ICCID1 au terminal d'identifiant d'e-SIM EID1. Sur réception de cette autorisation, le serveur SMDP+ envoie au terminal TER, à l'étape S8, des données visant à installer ce profil auprès du terminal TER. Une fois l'installation réalisée, à l'étape S9, le serveur de contrôle OPE reçoit une information de succès de l'installation et le procédé peut se poursuivre de façon connue en soi avec :
- à l'étape S10, la communication du serveur SMDP+ au serveur de contrôle OPE de l'opérateur que le profil ICCID1 est bien installé auprès du terminal EID1 (à cette étape le serveur de contrôle peut mettre à jour les données propres au terminal EID1, en confirmant l'association d'un identifiant de profil attribué ICCID1),
- à l'étape S11, des actions supplémentaires du serveur OPE peuvent être réalisées notamment auprès de dispositifs autres (appartenant à l'opérateur) qui nécessitent, par exemple, de connaitre le nom du profil (ICCID) et l'identifiant EID avec lesquels le profil a été installé avec succès. De tels dispositifs sont alors en mesure de contacter le terminal et ce profil en particulier pour opérer d'autres étapes non décrites ici ;
- à l'étape S13, la possibilité pour l'opérateur de contacter directement le terminal TER pour confirmer l'activation du terminal (le gestionnaire GES recevant alors le message d'activation sur le terminal) et de valider les services souscrits et de démarrer la taxation à l'étape S12 pour ce terminal.

Dans une variante de réalisation, lors de l'étape S2, le serveur de contrôle OPE:
- enregistre pour ce client ou gestionnaire de flotte GES une offre multi-SIM, dans sa base de données BD,
- reçoit et enregistre le code d'activation AC dans sa base de données BD, ce code d'activation étant à destination du client ou du gestionnaire GES.
Dans cette variante, les N profils à attribuer ne sont pas encore définis.
Dans ce cas, à l'étape S7, lors de l'activation du code d'activation AC, sur réception de l'identifiant EID1, le serveur de contrôle OPE retrouve la commande multi-SIM, associe un profil à ce terminal en échangeant avec le serveur SMDP+, puis met à jour l'identifiant de profil ICCID1 propre à cet identifiant d'e-SIM EID1 dans sa base de données BD, et décrémente le nombre de profils restant à définir (N devenant N-1).
Si nécessaire pour définir le profil à attribuer, le serveur de contrôle OPE communique avec une entité informatique comportant une interface homme/machine à disposition d'un gestionnaire de l'ensemble de terminaux, pour recevoir du gestionnaire un choix de profil à attribuer à ce terminal.

Cette activation groupée à l'aide du code unique AC au sens de l'invention offre une grande flexibilité car elle n'impose pas la connaissance des groupes à l'avance. Par conséquent, cette nouvelle activation peut se construire sans référence aux groupes de profils. Il s'agit alors d'une activation sans profil déterminé à l'avance.

A l'étape S7 de vérification de l'identifiant EID reçu d'un terminal, le serveur OPE peut vérifier que le nombre global de profils déjà attribués pour la flotte à laquelle appartient ce terminal et ayant fait l'objet de la fourniture du code d'activation commun AC, n'est pas atteint. Si cette première condition au moins n'est pas vérifiée, la demande d'attribution de profil est rejetée. Cette situation est illustrée sur la figure 2A : à l'étape S7, il est vérifié que le nombre N de profils à attribuer pour la flotte associée au code d'activation AC est déjà atteint, auquel cas la demande de profil du terminal est rejetée et ce rejet est transmis du serveur SMDP+ au terminal TER.

A l'étape S7, le serveur SER peut vérifier en outre qu'aucun profil autre que celui auquel correspond le code AC n'a déjà été attribué préalablement à ce terminal d'identifiant EID. Si tel est le cas, le serveur SER peut rejeter la demande d'attribution de profil, comme illustré sur la figure 2B. Toutefois, dans une variante, il serait possible de permettre la redéfinition d'un profil déjà alloué à un terminal et accepter une migration entrainant une nouvelle attribution de profil pour ce terminal, toujours en contrôlant que le nombre N de profils n'a pas été complètement alloué ou après une temporisation par exemple ou encore parce que le cadre contractuelle de l'offre le permet. Une telle réalisation permet alors une génération dynamique des profils. Cette allocation dynamique de profil ouvre la perspective de créer des offres dont la facturation est liée au nombre réel de profils installés et utilisés.

Par ailleurs, si le terminal TER n'est plus sous couverture du réseau lors de l'envoi des données de son profil, le serveur SMDP+ mémorise les données reçues du serveur de contrôle OPE jusqu'à la prochaine connexion du terminal au serveur SMDP+, puisque les contrôles ont déjà été validés par le serveur de contrôle OPE. Ainsi, le terminal peut télécharger ultérieurement les données de son profil en reprenant le cycle à partir de l'étape où le procédé s'est arrêté.

Dans la réalisation décrite ci-avant, le serveur de contrôle OPE peut être intégré au système d'information de l'opérateur. Toutefois, il peut s'agir d'une entité de contrôle indépendante, ou encore par exemple associée au serveur SMDP+. En effet, plus généralement, la vérification du code d'activation auprès d'un serveur de contrôle OPE (directe, basée sur le code AC reçu du terminal) permet d'identifier l'opérateur auquel est associée la commande multi-SIM et à quelle offre cette commande de flotte est rattachée. En outre, la récupération de l'identifiant EID du terminal permet de déterminer les droits et le profil ICCID associés à cet identifiant EID.

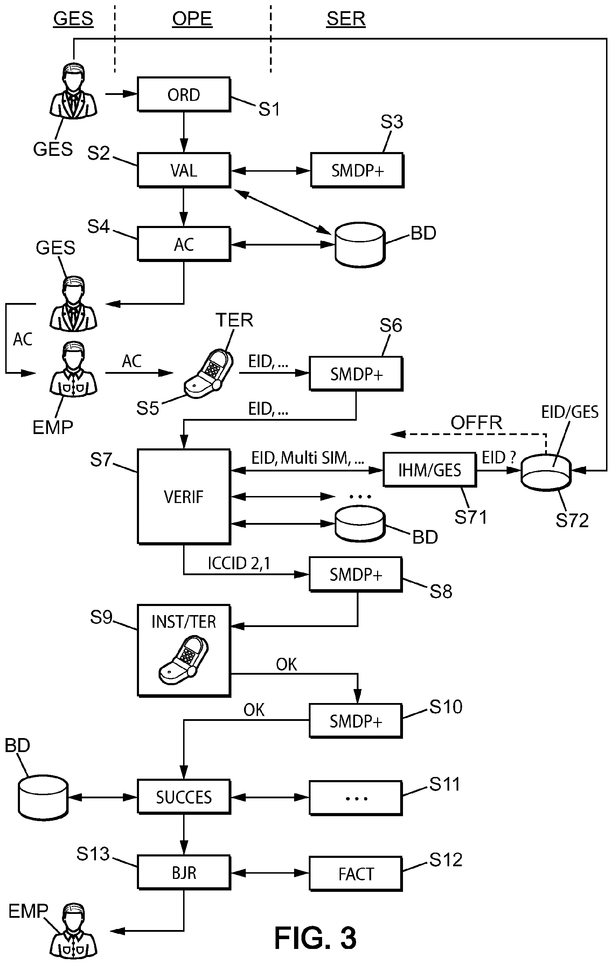

Dans un mode de réalisation illustré sur la figure 3, il est possible de prédéterminer des sous-groupes de profils (par exemple N1 profils gold, N2 profils silver, etc., avec N1+N2+...=N). Néanmoins, indépendamment du fait que des sous-groupes ont été prédéfinis ou non, à tout moment dans l'interaction entre le serveur OPE et le gestionnaire de flotte, via éventuellement le système d'information de l'opérateur proposant l'offre, il est possible de questionner le gestionnaire de flotte pour une prise de décision d'attribution de profil. En outre, cette interaction permet de changer l'approche de la livraison d'un profil par un opérateur et de décider cette livraison à partir de l'information de l'identifiant EID. Par exemple, cette interaction peut permettre de tester la compatibilité de cette identifiant EID avec un profil pressenti d'identifiant ICCID (éligibilité technique) et en fonction de ce test, de choisir un profil compatible avec le terminal TER ciblé.

On décrit ci-après en référence à la figure 3 un cas d'usage où un gestionnaire de flotte GES, administrateur des abonnements de télécommunication dans une entreprise, organise la commande d'une flotte de terminaux avec différents types de profils à attribuer à chaque terminal de la flotte, chaque terminal étant destiné à un employé EMP de l'entreprise.

Les étapes S1 à S4 sont similaires à celles décrites ci-avant en référence à la figure 1. Néanmoins, dans cette forme de réalisation, il est prévu :
- N1 profils d'une première catégorie (« gold » par exemple), à attribuer à N1 terminaux de la flotte,
- N2 profils d'une deuxième catégorie (« silver » par exemple), à attribuer à N2 terminaux de la flotte,
- Ni profils de catégorie i à attribuer à Ni terminaux, avec N1+N2+...+Ni=N (le nombre total de terminaux de la flotte).
En particulier, ces profils peuvent être prédéfinis par des identifiants ICCID, avec une première liste de N1 identifiants ICCID 1 pour la première catégorie, une deuxième liste de N2 identifiants ICCID2 pour la deuxième catégorie, etc.

Ensuite, le gestionnaire de flotte GES peut communiquer le code d'activation à l'employé EMP pour qu'il l'entre dans son terminal à l'étape S5. Le serveur SMDP+ transmet ensuite au serveur de contrôle OPE, comme précédemment en référence à la figure 1, un MatchingID correspondant au code d'activation AC, avec l'EID du terminal. A l'étape S7, le serveur de contrôle OPE retrouve la liste de profils correspondant à ce code d'activation AC et contacte à l'étape S71, par exemple via une interface homme/machine du système d'information de l'opérateur, le gestionnaire de flotte GES pour que le gestionnaire attribue à l'étape S72 un profil (parmi N1, ou parmi N2, etc.) à ce terminal. Dans un exemple de réalisation, le gestionnaire GES peut avoir accès à une mémoire stockant une base des identifiants EID des terminaux de la flotte, en correspondance de noms des employés auxquels sont destinés les terminaux respectifs de la flotte. Par reconnaissance de l'identifiant EID reçu du terminal de l'employé EMP, le gestionnaire GES peut déterminer l'employé sollicitant un profil pour son terminal et attribuer un profil choisi (par exemple un profil de la deuxième catégorie d'identifiant ICCID2.1). On comprendra que le gestionnaire de flotte peut piloter une entité informatique comportant:
- une mémoire pour stocker la base des identifiants EID en correspondance des noms (ou d'identifiants) d'utilisateurs futurs des terminaux,
- une interface de communication notamment avec le serveur de contrôle OPE pour récupérer l'EID du terminal requérant un profil,
- un circuit de traitement comportant par exemple un processeur pour identifier l'utilisateur sollicitant un profil, à partir de l'EID de son terminal, et
- une interface homme/machine pour recevoir du gestionnaire le choix du profil à affecter.

Une fois que le profil ICCID2.1 est déterminé et vérifié pour ce terminal EID à l'étape S7, les autres étapes S8 et suivantes sont similaires à celles présentées précédemment en référence à la figure 1.

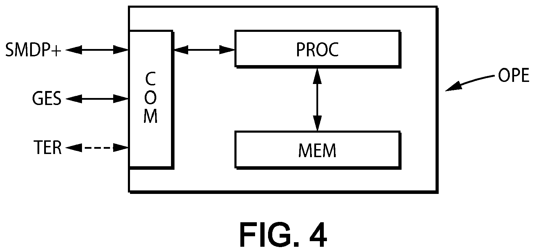

En référence maintenant à la figure 4, la présente invention vise aussi un serveur de contrôle pour la mise en œuvre du procédé ci-avant, et incluant en particulier :
- une interface COM de communication avec le serveur SMDP+, ainsi qu'avec le gestionnaire de flotte pour recevoir la commande multi-SIM, et/ou encore recevoir les types de profils à attribuer comme présenté sur la figure 3, et avec le terminal TER pour communiquer à l'étape S13 l'information d'activation du profil sur le terminal,
- une unité mémoire MEM stockant des instructions d'un programme informatique au sens de l'invention, ainsi que des données de travail, par exemple les données de commande à code d'activation unique AC, les données de contact de gestionnaires associés, les profils en nombres prédéfinis et les identifiants ICCID associés, éventuellement les identifiants de terminaux EID dans une forme de réalisation, etc.
- un circuit de traitement comportant par exemple un processeur PROC et coopérant avec la mémoire de travail MEM, pour l'exécution du procédé décrit ci-avant.

Bien entendu, la présente invention ne se limite pas aux formes de réalisation décrites ci-avant à titre d'exemple ; elle s'étend à d'autres variantes.

Par exemple, on a décrit ci-avant en particulier un serveur d'accès de type SMDP+ et référencé plus généralement SER sur les figures. Toutefois, d'autres technologies, évolutives, sont possibles.

Par ailleurs, comme indiqué précédemment, il est stocké initialement en mémoire du serveur de contrôle le code d'activation AC en correspondance des N profils à allouer aux N terminaux de la flotte. Cette correspondance, en pratique, peut être entre le code AC (déterminé par le MatchingID reçu du terminal), d'une part, et les identifiants de terminaux (ou de leur SIM) EID et/ou les identifiants de profils ICCID (non encore définis), d'autre part.

## Revendications

1. Procédé, mis en œuvre par un serveur de contrôle (OPE), de configuration d'un module de sécurité associé à un terminal de télécommunication,
**caractérisé en ce que** le serveur de contrôle (OPE) attribue (S2) un code d'activation unique (AC) correspondant à une souscription comprenant une pluralité de N profils à attribuer à un ensemble de N terminaux respectifs,
et **en ce que** le procédé comporte les étapes:
a) après activation du code auprès d'un premier terminal, attribuer (S7) un profil au premier terminal et enregistrer l'attribution de profil (ICCID1) au premier terminal (EID1),
b) pour une nouvelle demande d'attribution de profil correspondant audit code d'activation, répéter l'étape a) si les N profils n'ont pas déjà été attribués.

2. Procédé selon la revendication 1, dans lequel le serveur de contrôle associe N profils à attribuer lors de l'attribution du code d'activation.

3. Procédé selon la revendication 1 dans lequel le serveur de contrôle associe un profil au terminal lors de la demande d'attribution de profil.

4. Procédé selon l'une des revendications précédentes, **caractérisé en ce que** toute nouvelle demande d'attribution de profil correspondant audit code d'activation est rejetée si les N profils ont déjà été attribués.

5. Procédé selon l'une des revendications précédentes, **caractérisé en ce que** :
- après activation du code auprès d'un terminal de l'ensemble de terminaux, le serveur de contrôle reçoit de ce terminal au moins un identifiant de module de sécurité (EID) associé au terminal, et
- vérifie si un profil (ICCID) a déjà été attribué pour un terminal ayant ledit identifiant (EID) de module de sécurité.

6. Procédé selon la revendication 5, **caractérisé en ce que**, si un profil a déjà été attribué pour un terminal ayant ledit identifiant de module de sécurité, alors le serveur de contrôle rejette une demande d'attribution de profil émise par un terminal ayant ledit identifiant (EID) de module de sécurité.

7. Procédé selon l'une des revendications 5 et 6, **caractérisé en ce que**, si aucun profil n'a déjà été attribué pour un terminal ayant ledit identifiant de module de sécurité, le serveur de contrôle communique avec une entité informatique comportant une interface homme/machine à disposition d'un gestionnaire de l'ensemble de terminaux, pour recevoir du gestionnaire un choix de profil à attribuer audit terminal.

8. Procédé selon l'une des revendications précédentes, **caractérisé en ce que**, après activation du code auprès d'un terminal de l'ensemble de terminaux, le serveur de contrôle reçoit de ce terminal au moins une donnée correspondant au code d'activation et permettant au serveur de contrôle de retrouver les attributions de profils (ICCID) déjà effectuées pour des terminaux de l'ensemble de terminaux.

9. Procédé selon l'une des revendications précédentes, **caractérisé en ce que** des données du terminal reçues auprès du serveur de contrôle, avant l'attribution d'un profil à ce terminal, transitent via un serveur d'accès (SER).

10. Procédé selon l'une des revendications précédentes, **caractérisé en ce que** des données d'installation d'un profil auprès d'un terminal, sont émises par le serveur de contrôle et transmises au terminal via un serveur d'accès (SER).

11. Programme informatique **caractérisé en ce qu'**il comporte des instructions pour la mise en œuvre du procédé selon l'une des revendications 1 à 10, lorsque ce programme est exécuté par un processeur.

12. Serveur de contrôle, **caractérisé en ce qu'**il comporte au moins un circuit de traitement pour exécuter les étapes du procédé selon l'une des revendications 1 à 10, pour configurer un module de sécurité implanté dans un terminal de télécommunication d'un ensemble de N terminaux.

13. Serveur selon la revendication 12, **caractérisé en ce qu'**il comporte en outre une interface de communication avec un serveur d'accès (SER).

14. Serveur selon l'une des revendications 12 et 13, **caractérisé en ce qu'**il comporte une interface de communication avec une entité informatique incluant une interface homme/machine à disposition d'un gestionnaire de l'ensemble de terminaux, pour recevoir du gestionnaire un choix de profil à attribuer à chaque terminal de l'ensemble de terminaux.

## Patentansprüche

1. Von einem Steuerungsserver (OPE) durchgeführtes Verfahren zur Konfiguration eines Sicherheitsmoduls, das einem Telekommunikationsendgerät zugeordnet ist,
**dadurch gekennzeichnet, dass** der Steuerungsserver (OPE) einen eindeutigen Aktivierungscode (AC) zuweist (S2), der einer Teilnahme entspricht, die eine Mehrzahl von N Profilen umfasst, die einem Satz von N jeweiligen Endgeräten zuzuweisen sind,
und dadurch, dass das Verfahren die folgenden Schritte aufweist:
a) nach Aktivierung des Codes bei einem ersten Endgerät, Zuweisen (S7) eines Profils an das erste Endgerät und Registrieren der Zuweisung eines Profils (ICCID1) an das erste Endgerät (EID1),
b) für eine neue Anforderung zur Zuweisung eines Profils, das dem Aktivierungscode entspricht, Wiederholen des Schritts a), wenn die N Profile nicht bereits zugewiesen wurden.

2. Verfahren nach Anspruch 1, wobei der Steuerungsserver N Profile zuordnet, die bei der Zuweisung des Aktivierungscodes zuzuweisen sind.

3. Verfahren nach Anspruch 1, wobei der Steuerungsserver bei der Profilzuweisungsanforderung dem Endgerät ein Profil zuordnet.

4. Verfahren nach einem der vorhergehenden Ansprüche, **dadurch gekennzeichnet, dass** jede neue Anforderung zur Zuweisung eines Profils, das dem Aktivierungscode entspricht, zurückgewiesen wird, wenn die N Profile bereits zugewiesen wurden.

5. Verfahren nach einem der vorhergehenden Ansprüche, **dadurch gekennzeichnet, dass**:
- nach Aktivierung des Codes bei einem Endgerät des Satzes von Endgeräten der Steuerungsserver von diesem Endgerät mindestens eine Kennung eines Sicherheitsmoduls (EID) empfängt, die dem Endgerät zugeordnet ist, und
- überprüft, ob ein Profil (ICCID) für ein Endgerät, das die Sicherheitsmodulkennung (EID) aufweist, bereits zugewiesen wurde.

6. Verfahren nach Anspruch 5, **dadurch gekennzeichnet, dass**, wenn ein Profil für ein Endgerät, das die Sicherheitsmodulkennung aufweist, bereits zugewiesen wurde, der Steuerungsserver eine Profilzuweisungsanforderung, die von einem Endgerät gesendet wurde, das die Sicherheitsmodulkennung (EID) aufweist, zurückweist.

7. Verfahren nach einem der Ansprüche 5 und 6, **dadurch gekennzeichnet, dass**, wenn kein Profil für ein Endgerät, das die Sicherheitsmodulkennung aufweist, bereits zugewiesen wurde, der Steuerungsserver mit einer Computereinheit kommuniziert, die eine Mensch-Maschine-Schnittstelle aufweist, die einem Verwalter des Satzes von Endgeräten zur Verfügung steht, um von dem Verwalter eine Auswahl eines Profils zu empfangen, das dem Endgerät zuzuweisen ist.

8. Verfahren nach einem der vorhergehenden Ansprüche, **dadurch gekennzeichnet, dass** nach Aktivierung des Codes bei einem Endgerät des Satzes von Endgeräten der Steuerungsserver von diesem Endgerät mindestens eine Angabe empfängt, die dem Aktivierungscode entspricht und es dem Steuerungsserver gestattet, die Zuweisungen von Profilen (ICCID) wiederzufinden, die für Endgeräte des Satzes von Endgeräten bereits durchgeführt wurden.

9. Verfahren nach einem der vorhergehenden Ansprüche, **dadurch gekennzeichnet, dass** Angaben des Endgeräts, die beim Steuerungsserver empfangen werden, vor der Zuweisung eines Profils an dieses Endgerät über einen Zugriffsserver (SER) laufen.

10. Verfahren nach einem der vorhergehenden Ansprüche, **dadurch gekennzeichnet, dass** die Angaben zur Installation eines Profils bei einem Endgerät durch den Steuerungsserver gesendet und über einen Zugriffsserver (SER) an das Endgerät übertragen werden.

11. Computerprogramm, **dadurch gekennzeichnet, dass** es Anweisungen für die Durchführung des Verfahrens nach einem der Ansprüche 1 bis 10 umfasst, wenn dieses Programm von einem Prozessor ausgeführt wird.

12. Steuerungsserver, **dadurch gekennzeichnet, dass** er mindestens eine Verarbeitungsschaltung aufweist, um die Schritte des Verfahrens nach einem der Ansprüche 1 bis 10 auszuführen, um ein Sicherheitsmodul zu konfigurieren, das in ein Telekommunikationsendgerät eines Satzes von N Endgeräten eingesetzt ist.

13. Server nach Anspruch 12, **dadurch gekennzeichnet, dass** er ferner eine Schnittstelle zur Kommunikation mit einem Zugriffsserver (SER) aufweist.

14. Server nach einem der Ansprüche 12 und 13, **dadurch gekennzeichnet, dass** er eine Schnittstelle zur Kommunikation mit einer Computereinheit aufweist, die eine Mensch-Maschine-Schnittstelle enthält, die einem Verwalter des Satzes von Endgeräten zur Verfügung steht, um von dem Verwalter eine Auswahl eines Profils zu empfangen, das jedem Endgerät des Satzes von Endgeräten zuzuweisen ist.

## Claims

1. Method, implemented by a control server (OPE), for configuring a security module associated with a telecommunication terminal,
**characterized in that** the control server (OPE) assigns (S2) a unique activation code (AC) corresponding to a subscription comprising a plurality of N profiles to be assigned to a set of N respective terminals,
and **in that** the method includes the steps of:
a) after activation of the code via a first terminal, assigning (S7) a profile to the first terminal and storing the profile assignment (ICCID1) to the first terminal (EID1),
b) for a new request to assign a profile corresponding to said activation code, repeating step a) if the N profiles have not yet been assigned.

2. Method according to Claim 1, wherein the control server associates N profiles to be assigned during the assignment of the activation code.

3. Method according to Claim 1, wherein the control server associates a profile with the terminal during the request to assign a profile.

4. Method according to one of the preceding claims,
**characterized in that** any new request to assign a profile corresponding to said activation code is rejected if the N profiles have already been assigned.

5. Method according to one of the preceding claims,
**characterized in that**:
- after activation of the code via a terminal of the set of terminals, the control server receives from said terminal at least one identifier of a security module (EID) associated with the terminal, and
- checks whether a profile (ICCID) has already been assigned for a terminal having said security module identifier (EID).

6. Method according to Claim 5, **characterized in that**, if a profile has already been assigned for a terminal having said security module identifier, then the control server rejects a request to assign a profile transmitted by a terminal having said security module identifier (EID).

7. Method according to either of Claims 5 and 6,
**characterized in that**, if no profile has yet been assigned for a terminal having said security module identifier, the control server communicates with a computer entity including a human-machine interface available to a manager of the set of terminals in order to receive a choice of profile to be assigned to said terminal from the manager.

8. Method according to one of the preceding claims,
**characterized in that**, after activation of the code via a terminal of the set of terminals, the control server receives at least one datum corresponding to the activation code from this terminal allowing the control server to retrieve the assignments of profiles (ICCID) that have already been carried out for terminals in the set of terminals.

9. Method according to one of the preceding claims,
**characterized in that** data from the terminal received via the control server, before the assignment of a profile to this terminal, travel via an access server (SER).

10. Method according to one of the preceding claims,
**characterized in that** data for installation of a profile via a terminal are transmitted by the control server and transmitted to the terminal via an access server (SER).

11. Computer program, **characterized in that** it includes instructions for implementing the method according to one of Claims 1 to 10 when this program is executed by a processor.

12. Control server, **characterized in that** it includes at least one processing circuit for executing the steps of the method according to one of Claims 1 to 10 for configuring a security module incorporated within a telecommunication terminal of a set of N terminals.

13. Server according to Claim 12, **characterized in that** it further includes an interface for communication with an access server (SER).

14. Server according to either of Claims 12 and 13,
**characterized in that** it includes an interface for communication with a computer entity including a human-machine interface available to a manager of the set of terminals in order to receive a choice of profile to be assigned to each terminal of the set of terminals from the manager.
